# EUROPÄISCHE PATENTSCHRIFT

(11) **EP 2 609 055 B1**
(45) Veröffentlichungstag und Bekanntmachung des Hinweises auf die Patenterteilung: **24.06.2015**
(21) Anmeldenummer: 11748933.6
(22) Anmeldetag: 24.08.2011
(51) Int. Cl.: C04B 40/00, C04B 28/02, C04B 24/24

(54) **BESCHLEUNIGER**
ACCELERATOR
ACCÉLÉRATEUR

(30) Priorität: 24.08.2010 EP 10173833
(43) Veröffentlichungstag der Anmeldung: 03.07.2013
(73) Patentinhaber: Sika Technology AG, 6340 Baar (CH)
(72) Erfinder: BÜRGE, Christian, CH-5503 Schafisheim (CH); WOMBACHER, Franz, CH-8916 Jonen (CH); KURZ, Christophe, CH-5304 Endingen (CH); MARAZZANI, Beat, CH-8102 Oberengstringen (CH); MÄDER, Gilbert, CH-8460 Marthalen (CH); SULSER, Ueli, CH-8103 Unterengstringen (CH)
(74) Vertreter: Sika Patent Attorneys
(86) Internationale Anmeldenummer: PCT/EP2011/064553
(87) Internationale Veröffentlichungsnummer: WO 2012/025567

(56) Entgegenhaltungen:
- EP-A2- 0 508 158
- WO-A1-2004/024647
- WO-A1-2010/026155

## Beschreibung

### Technisches Gebiet

Die Erfindung betrifft Zusatzmittel für hydraulische Bindemittel und daraus hergestellte Systeme wie Beton und Mörtel. Insbesondere betrifft die vorliegende Erfindung einen Abbinde- und Erhärtungsbeschleuniger für hydraulische Bindemittel hergestellt durch Umsetzung einer Calciumverbindung **CV** mit einer Siliciumverbindung **SV** und Zugabe eines Phosphonsäurederivates sowie dessen Herstellung.

### Stand der Technik

Bei Beton- oder Stahlbetonfertigteilen oder bei Fahrbahn- oder Pistensanierungen wird vermehrt eine hohe Frühfestigkeit gefordert, damit die Fertigteile bereits nach wenigen Stunden entschalt, transportiert, gestapelt oder vorgespannt werden können oder die Fahrbahnen oder Pisten befahren werden können. Um diese Zielsetzung in der Praxis zu erreichen, werden neben leistungsfähigen Betonrezepturen, wie niedriger w/z-Wert oder hoher Zementgehalt, oftmals auch Wärme- oder Dampfbehandlungen angewendet. Diese Behandlungen brauchen viel Energie, so dass aufgrund steigender Energiepreise, erheblicher Investitionskosten und Dauerhaftigkeits- sowie Sichtbetonproblemen zunehmend von dieser Behandlung abgesehen wird und nach anderen Wegen zur Beschleunigung des Erhärtungsprozesses gesucht wird.

Beschleunigende Zusätze stellen bislang keine befriedigende Alternative zur Wärme- oder Dampfbehandlung dar. Es sind zwar viele Substanzen bekannt, welche das Abbinden und Erhärten von Beton beschleunigen, solche beschleunigenden Zusätze, insbesondere Zusätze enthaltend Calciumverbindungen mit Siliciumverbindungen, haben jedoch oft den Nachteil, dass sie in ihrer Konsistenz so hochviskos sind, dass sich ihre Herstellung sowie die Verwendung, insbesondere Dosierung, aufwendig gestaltet. Ferner führt die Verwendung von bekannten beschleunigenden Zusätzen durch eine signifikante Herabsetzung des Ausbreitmasses des Betons zu einer stark verringerten Verarbeitbarkeit des Betons.

In diesem Zusammenhang offenbart die WO 2010/026155 A1 (Construction Research & Technology GmbH) z.B. die Herstellung von Erhärtungsbeschleunigern wobei eine wasserlösliche Calciumverbindung in Gegenwart eine wässrigen Lösung eines wasserlöslichen Kammpolymers mit einem wasserlöslichen Silikat umgesetzt wird. Zusätzlich kann unter anderem z.B. ein Polykondensat mit einer Struktureinheit umfassend eine O=P(OMa)(OMa)-[O-CH(R3)-CH(R4)]-Einheit vorliegen.

Die WO 2004/024647 A1 (Construction Research & Technology GmbH) beschreibt unter anderem oligomere Dispergiermittel für hydraulische Zusammensetzungen, umfassend ein Reaktionsprodukt aus wenigstens zwei Komponenten A und C. Komponente A kann z.B. ein Phosphonsäurederivat und Komponente C ein Methoxy-Polyalkylenamin sein.

### Darstellung der Erfindung

Aufgabe der vorliegenden Erfindung ist es daher, beschleunigende Zusätze sowie Verfahren zu deren Herstellung zur Verfügung zu stellen, welche die oben genannten Nachteile nicht aufweisen.

Überraschenderweise wurde gefunden, dass dies durch das Verfahren zur Herstellung eines Abbinde- und Erhärtungsbeschleunigers für hydraulische Bindemittel gemäss Anspruch 1 erreicht werden kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt umfasst die vorliegende Erfindung ein Verfahren zur Herstellung eines Abbinde- und Erhärtungsbeschleunigers, nachfolgend auch Beschleuniger genannt, für hydraulische Bindemittel aufweisend einen Schritt:
(i) zur Umsetzung einer Calciumverbindung **CV** mit einer Siliciumverbindung **SV;** sowie einen Schritt
(ii) zur Zugabe eines Phosphonsäurederivates der Formel (I) 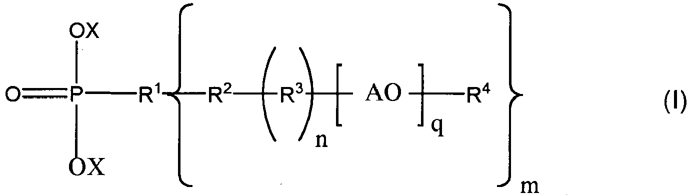 wobei X für H⁺, Alkalimetallion, Erdalkalimetallion, zwei- oder dreiwertiges Metallion, Ammoniumion, organische Ammoniumgruppe oder einen Rest der Formel (II) steht 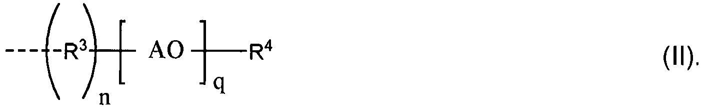 Vorzugsweise steht X für H⁺, Alkalimetallion, Erdalkalimetallion oder einen Rest der Formel (II), insbesondere für H⁺, Alkalimetallion oder Erdalkalimetallion.
   R¹ steht für einen organischen Rest mit 1 bis 10 C-Atomen,
   R² unabhängig voneinander für 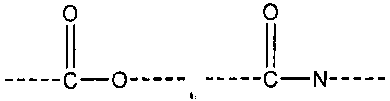 oder 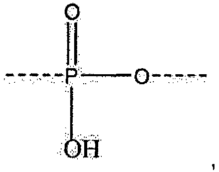 vorzugsweise für 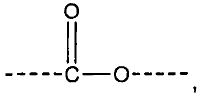 R³ für eine Alkylgruppe mit 1 bis 6 C-Atomen,
   R⁴ für H, eine Alkylgruppe, vorzugsweise mit 1 bis 20 C-Atomen, eine Alkylarylgruppe, vorzugsweise mit 7 bis 20 C-Atomen.
   Der Substituent A steht unabhängig voneinander für eine C2- bis C4-Alkylengruppe, der Index q für einen Wert von 2 bis 300, insbesondere von 2 bis 50, besonders bevorzugt von 3 bis 10, der Index m für einen Wert von 1 bis 4, vorzugsweise für einen Wert von 3, der Index n für einen Wert von 0 bis 1;
und wobei die Calciumverbindung **CV** ausgewählt ist aus der Gruppe bestehend aus Calciumchlorid, Calciumnitrat, Calciumnitrit, Calciumformiat, Calciumacetat, Calciumlactat und Calciumsulfamat,
und die Siliciumverbindung **SV** ausgewählt ist aus der Gruppe bestehend aus Natriumsilicat, Kaliumsilicat, Lithiumsilicat, Wasserglas, Kieselsäure, Natriummetasilicat, Kaliummetasilicat, Di-Natriummetasilicat, Di-Kaliummetasilicate, Siliciumdioxid, Di-Natriumdisilicat und Di-Natriumtrisilicat.

Phosphonsäurederivate der Formel (I) sind beispielsweise erhältlich durch Veresterung oder Amidierung von Phosphonsäureverbindungen mit Polyoxyalkylenverbindungen.

Geeignete Phosphonsäureverbindungen, welche durch Veresterung oder Amidierung mit Polyoxyalkylenverbindungen Phosphonsäurederivate der Formel (I) ergeben, sind beispielsweise ausgewählt aus der Gruppe bestehend aus [Bis(phosphonomethyl)amino]methylphosphonsäure, [2-[Bis(phosphonomethyl)amino]ethyl-(phosphonomethyl)amino]methylphosphonsäure, [2-[2-[Bis-(phosphonomethyl)amino]ethyl-(phosphonomethyl)amino]ethyl-(phosphonomethyl)amino]methyl-hydroxyphosphinsäure, [6-[Bis(phosphonomethyl)amino]-hexyl-(phosphonomethyl)amino]methylphosphonsäure und [Bis[6-[bis(phosphonomethyl)amino]hexyl]amino]methylphosphonsäure.

Bevorzugt sind Phosphonsäurederivate, welche Carbonsäuregruppen aufweisen, besonders bevorzugt sind Phosphonsäurederivate ausgewählt aus der Gruppe bestehend aus 1-Phosphonobutan-1,2,4-tricarboxylsäure, 2-Phosphonobutan-1,2,4-tricarboxylsäure, 3-Phosphonobutan-1,2,4-tricarboxylsäure, 4-Phosphonobutan-1,2,4-tricarboxylsäure, 2,4-Diphosphonobutan-1,2,4-tricarboxylsäure, 2-Phosphonobutan-1,2,3,4-tetracarboxylsäure, 1-Methyl-2-phosphonopentan-1,2,4-tricarboxylsäure, 1,2-Phosphonoethan-2-dicarboxylsäure, 1-Phosphonoethan-2-carboxylsäure, 1,2-Phosphonoethan-2-dicarboxylsäure und 1-Phosphonoethan-2-carboxylsäure.

Geeignete Polyoxyalkylenverbindungen, welche durch Veresterung oder Amidierung mit Phosphonsäureverbindungen Phosphonsäurederivate der Formel (I) ergeben, sind Polyoxyalkylenverbindungen, welches mit unter üblichen Reaktionsbedingungen nicht reaktiven Endgruppen einseitig abgeschlossen sind und am anderen Ende Hydroxy- oder Amin-funktionalisiert sind.

Unter ,mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei, einseitig abgeschlossen' Verbindungen ist nur eine Seite nicht mehr zur Reaktion fähig.

Geeignete Polyoxyalkylenverbindungen sind beispielsweise Polymerisationsprodukte von Ethylenoxid, 1,2-Propylenoxid, 1,2- oder 2,3-Butylenoxid, Oxetan, Tetrahydrofuran oder Mischungen davon, gegebenenfalls polymerisiert mit Hilfe eines Startermoleküls mit zwei oder mehreren aktiven Wasserstoffatomen wie beispielsweise Wasser oder Verbindungen mit einer oder zwei, vorzugsweise einer, OH- oder NH-Gruppen wie beispielsweise Methanol, Ethanol, Propanol, 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, sowie Mischungen der genannten Verbindungen.

Weitere geeignete Polyoxyalkylenverbindungen, welche an einem Ende Amin-funktionalisiert sind, sind beispielsweise Ethergruppen-haltige aliphatische Monoamine, insbesondere Polyoxyalkylen-Monoamine. Solche sind beispielsweise erhältlich unter dem Namen Jeffamine^{®} (von Huntsman). Insbesondere geeignete Polyoxyalkylen-Monoamine sind Jeffamine^{®} M-600, Jeffamine^{®} M-1000, Jeffamine^{®} M-2005 und Jeffamine^{®} M-2070.

Besonders geeignet als Polyoxyalkylenverbindungen, welche durch Veresterung oder Amidierung mit Phosphonsäureverbindungen Phosphonsäurederivate der Formel (I) ergeben, sind Polyoxyethylenglycole und Polyoxypropylenglycole. Insbesondere geeignet sind Polyoxyalkylenglycole mit einem Molekulargewicht im Bereich von 300 bis 5'000 g/mol, insbesondere 400 bis 4'000 g/mol.

Der Anteil des Phosphonsäurederivats der Formel (I) beträgt vorzugsweise 0.01- 10 Gew.-%, insbesondere bevorzugt 0.1 bis 2 Gew.-%, bezogen auf das Gesamtgewicht des Abbinde- und Erhärtungsbeschleunigers.

Vorzugsweise handelt es sich bei der Calciumverbindung CV um eine gut wasserlösliche Calciumverbindungen, am meisten bevorzugt sind Calciumnitrat, Calciumacetat und Calciumsulfamat.

Vorzugsweise handelt es sich bei der Siliciumverbindung **SV** um eine wasserlösliche Siliciumverbindung, am meisten bevorzugt sind Wassergläser, insbesondere Natriumsilicat und Kaliumsilicat.

Unter dem Begriff "Wasserglas" werden im vorliegenden Dokument aus dem Schmelzfluss erstarrte wasserlösliche Salze von Kieselsäuren, insbesondere Kalium- und Natriumsilicate oder deren wässrige Lösungen verstanden, wie sie beschreiben sind in CD Römpp Chemie Lexikon, Version 1.0, Georg Thieme Verlag, Stuttgart 1995.

Handelt es sich bei der Siliciumverbindung **SV** um Natriumsilicat, so ist ein Molverhältnis von SiO₂ : Na₂O= 0.5 - 4.0, vorzugsweise 0.8 - 2, insbesondere 1.0- 1.5 bevorzugt.

Handelt es sich bei der Siliciumverbindung **SV** um Kaliumsilicat, so ist ein Molverhältnis von SiO₂ : K₂O= 0.5 - 4.0, vorzugsweise 0.8 - 2, insbesondere 1.0-1.5 bevorzugt.

Die Umsetzung der Calciumverbindung **CV** mit der Siliciumverbindung **SV** in Schritt (i) findet vorzugsweise in Gegenwart von Wasser, insbesondere in Wasser, statt. Weiter ist es von Vorteil, wenn die Calciumverbindung **CV** und die Siliciumverbindung **SV** getrennt voneinander dem Wasser zugegeben werden.

Die Umsetzung in Schritt (i) findet vorzugsweise in einem Flüssigphasen-Reaktor ausgewählt aus der Gruppe bestehend aus Sulzermixer-Reaktor, Reaktor mit externer Rezirkulation, Reaktor mit interner Rezirkulation, Kaskadenreaktor, Loop-Reaktor und Rühr-Reaktor statt. Bevorzugte Flüssigphasen-Reaktoren sind insbesondere Rühr-Reaktoren und Statikmischer.

Die Zugabe des Phosphonsäurederivates der Formel (I) in Schritt (ii) kann vor und/oder während und/oder nach Schritt (i) stattfinden.

Vorzugsweise wird das Phosphonsäurederivat der Formel (I) vor Schritt (i) zugegeben, in diesem Fall ist es vorteilhaft, das Phosphonsäurederivat der Formel (I) der Calciumverbindung **CV** und der Siliciumverbindung **SV** getrennt voneinander zuzugeben. Vorzugsweise wird 10 - 100 Gewichts-%, vorzugsweise 30 - 70 Gewichts-%, des zugegebenen Phosphonsäurederivats der Formel (I) der Calciumverbindung **CV** zugegeben. Insbesondere bevorzugt erfolgt die Zugabe des Phosphonsäurederivats der Formel (I) zu 50 - 70 Gewichts-% zur Calciumverbindung **CV** und zu 30 - 50 Gewichts-% zur Siliciumverbindung **SV.** Die Zugabe des Phosphonsäurederivats der Formel (I) vor Schritt (i) trägt unter anderem zu einem besonders vorteilhaften Ausbreitmass von Bindemittelzusammensetzungen enthaltend so hergestellte Beschleuniger bei.

Es kann jedoch auf vorteilhaft sein, das Phosphonsäurederivat der Formel (I) nach dem Schritt (i) zugegeben. Die Zugabe des Phosphonsäurederivats der Formel (I) nach Schritt (i), jedoch vor einem allfälligen Schritt (v) des Zerkleinerns des Umsetzungsproduktes aus Schritt (i) trägt unter anderem zu einer besonders niedrigen Viskosität der so hergestellten Beschleuniger bei.

Vorzugsweise liegen im Verlauf der Umsetzung von Schritt (i) folgende Molverhältnisse vor: Calcium : Silicium = 0.5 - 2.0, vorzugsweise 0.8 - 1.5, insbesondere bevorzugt 0.9 - 1.2. Dies führt insbesondere bei der Verwendung der Beschleuniger in hydraulischen Bindemitteln zu einem vorteilhaften Ausbreitmass bei gleichzeitiger hoher Druckfestigkeit nach 8 Stunden.

In einer bevorzugten Ausführungsform handelt es sich bei der Calciumverbindung **CV** um Calciumnitrat und bei der Siliciumverbindung **SV** um Natriumsilicat. Vorzugsweise beträgt das Molverhältnis während der Umsetzung in Schritt (i) Calciumnitrat: Natriumsilicat = 0.25 - 8.0, vorzugsweise 0.65 - 3, wobei das Natriumsilicat vorzugsweise ein Molverhältnis SiO₂ : Na₂O von 1.0- 1.5 aufweist. Dies ist insbesondere zur Erreichung eines vorteilhaften Ausbreitmasses in hydraulischen Bindemitteln bei gleichzeitiger hoher Druckfestigkeit nach 8 Stunden vorteilhaft.

Während der Umsetzung in Schritt (i) kann weiter eine Verbindung ausgewählt aus der Gruppe bestehend aus Aluminiumsalz, Aluminiumhydroxid, Aluminiumoxid, Magnesiumsalz, Magnesiumhydroxid und Magnesiumoxid, zugegeben werden, insbesondere sind diese Salze ausgewählt aus der Gruppe bestehend aus Nitrate und Sulfate.

Es kann weiter vorteilhaft sein, wenn das Verfahren weiter einen Schritt (iii) zur Zugabe eines Verdickungmittels, insbesondere ausgewählt aus der Gruppe bestehend aus Celluloseether, Polysacharide, Stärkederivate, Polyvinylalkohole und Polyacrylamide, und/oder weiter einen Schritt
(iv) zur Zugabe einer Verbindung ausgewählt aus der Gruppe bestehend aus Aminoalkohole, Hydroxycarbonsäuren, (Erd)-Alkalithiocyanate, (Erd)-Alkalihalogenide und Glycerinverbindungen, aufweist.

Weiter kann eine Zugabe von einem Dispergiermittel ausgewählt aus der Gruppe bestehend aus Polycarboxylate, MelaminFormaldehydkondensate, Naphthalinsulfonate, Ligninsulfonate und Polyoxyalkylene vorteilhaft sein. Es kann jedoch aber auch vorteilhaft sein, wenn keine der vorgenannten Dispergiermittel zugegeben werden.

Typischerweise wird in dem Verfahren der Schritt (i) bei einer Temperatur von -10 - 90 °C, einem pH von 6 - 14 und einem Druck von 0.8 - 20 bar durchgeführt.

Es ist insbesondere für die aus dem Beschleuniger resultierende Frühfestigkeit vorteilhaft, wenn das Verfahren weiter einen Schritt (v) des Zerkleinerns des Umsetzungsproduktes aus Schritt (i) aufweist. Insbesondere handelt es sich bei dem Schritt (v) um Zerkleinern durch Rührwerksmühlen, Walzenstühlen, Kolloidmühlen und/oder Homogenisatoren, vorzugsweise durch Homogenisatoren.

Vorzugsweise führt der der Schritt (v) zu einer durchschnittlichen Partikelgrösse des Reaktionsprodukts von 1000 - 10, vorzugsweise 100 - 10 nm. Dies ist insbesondere für die aus dem Beschleuniger resultierende Frühfestigkeit vorteilhaft.

In einem weiteren Aspekt betrifft die vorliegende Erfindung einen Abbinde- und Erhärtungsbeschleuniger hergestellt nach einem der vorgehend genannten Verfahren. Vorzugsweise liegt der Abbinde- und Erhärtungsbeschleuniger als Pulver, vor, insbesondere als Kolloid, Suspension oder als wässrige Lösung.

Der erfindungsgemässe Abbinde- und Erhärtungsbeschleuniger findet in unterschiedlichen Bereichen Anwendung, insbesondere in der Beton- und Zementtechnologie. Der Beschleuniger verfügt über besonders gute Eigenschaft als Beschleuniger für hydraulisch abbindende Zusammensetzungen, das heisst, dass er zur Beschleunigung des Abbindens und Erhärtens von hydraulischen Bindemitteln, insbesondere von Schnellzement, sowie daraus hergestelltem Mörtel oder Beton, verwendet werden kann. Zudem kann mit dem erfindungsgemässen Beschleuniger Mörtel oder Beton hergestellt werden, welcher eine hohe Früh- sowie Endfestigkeit aufweist. Der erfindungsgemässe Abbinde- und Erhärtungsbeschleuniger ist somit besonders geeignet, wenn die hydraulisch abbindende Zusammensetzung sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten, damit die Fertigteile bereits nach wenigen Stunden entschalt, transportiert, gestapelt oder vorgespannt werden können oder die Fahrbahnen oder Pisten befahren werden können.

Überraschenderweise hat sich der erfindungsgemässe Abbinde- und Erhärtungsbeschleuniger durch die Zugabe eines Phosphonsäurederivates der Formel (I) als Beschleuniger mit einer geringen Viskosität, verglichen mit Beschleunigern, welchen in der Beton-Technologie bekannte Dispergiermittel zugegeben wurde, erwiesen. Zudem zeigt der erfindungsgemässe Beschleuniger in damit hergestelltem Mörtel oder Beton ein vorteilhaftes Ausbreitmass sowie gute Früh- und Endfestigkeit.

Als hydraulisch abbindende Systeme oder Zusammensetzungen können grundsätzlich alle dem Beton-Fachmann bekannten hydraulisch abbindenden Substanzen verwendet werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung ist gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Der erfindungsgemässe Beschleuniger kann zur erfindungsgemässen Verwendung sowohl in flüssiger als auch in fester Form, sowohl allein oder als Bestandteil eines Zusatzmittels verwendet werden. Die Erfindung betrifft daher zusätzlich ein Zusatzmittel in flüssiger oder fester Form umfassend mindestens einen erfindungsgemässen Beschleuniger.

Um die Verarbeitbarkeit zu verbessern und die Verarbeitungszeit nach Zugabe des erfindungsgemässen Beschleunigers zu einem hydraulischen Bindemittel zu verlängern, enthält das Zusatzmittel zusätzlich zum Beschleuniger bevorzugt einen Verflüssiger. Als Verflüssiger kommen beispielsweise Lignosulfonate, sulfonierte Naphthalin-Formaldehyd Kondensate, sulfonierte Melamin-Formaldehyd-Kondensate, sulfonierte Vinylcopolymere oder Polycarboxylatverflüssiger, wie sie beispielsweise in der Betonchemie als Hochleistungsverflüssiger bekannt sind, oder Mischungen davon, in Frage.

Der Beschleuniger oder das Zusatzmittel enthaltend den Beschleuniger kann auch weitere Bestandteile enthalten. Beispiele für weitere Bestandteile sind Lösungsmittel, insbesondere Wasser, oder Additive, wie weitere beschleunigende Substanzen wie beispielsweise Thiocyanate, Nitrate oder Aluminiumsalze, Säuren oder deren Salze oder aminhaltige Substanzen wie Alkanolamine, Verzögerer, Schwindreduzierer, Entschäumer, oder Schaumbildner.

Falls der erfindungsgemässe Beschleuniger oder das Zusatzmittel enthaltend den Beschleuniger in flüssiger Form verwendet werden, wird für die Umsetzung vorzugsweise ein Lösungsmittel eingesetzt. Bevorzugte Lösungsmittel sind beispielsweise Hexan, Toluol, Xylol, Methylcyclohexan, Cyclohexan oder Dioxan sowie Alkohole, insbesondere Ethanol oder Isopropanol, und Wasser, wobei Wasser das am meist bevorzugte Lösungsmittel ist.

Der erfindungsgemässe Beschleuniger oder das Zusatzmittel enthaltend den Beschleuniger können auch in festem Aggregatzustand vorliegen, beispielsweise als Pulver, Schuppen, Pellets, Granulate oder Platten und lassen sich in dieser Form problemlos transportieren und lagern.

Der erfindungsgemässe Beschleuniger kann beispielsweise im festen Aggregatzustand vorliegen und mit einem Verflüssiger, welcher ebenfalls im festen Aggregatzustand vorliegt, vermischt werden und so über längere Zeit gelagert oder transportiert werden.

Der erfindungsgemässe Beschleuniger oder das Zusatzmittel enthaltend den Beschleuniger können im festem Aggregatzustand auch Bestandteil einer Zementzusammensetzung, einer sogenannten Trockenmischung, sein, die über längere Zeit lagerfähig ist und typischerweise in Säcken abgepackt oder in Silos gelagert wird und zum Einsatz kommt.

Der erfindungsgemässe Beschleuniger oder das Zusatzmittel enthaltend den Beschleuniger können auch einer üblichen Betonzusammensetzung mit oder kurz vor oder kurz nach der Zugabe des Wassers beigegeben werden. Als besonders geeignet gezeigt hat sich hierbei die Zugabe des erfindungsgemässen Beschleuniger in Form einer wässrigen Lösung oder Dispersion, insbesondere als Anmachwasser oder als Teil des Anmachwassers oder als Teil eines flüssigen Zusatzmittels, welches mit dem Anmachwasser zum hydraulischen Bindemittel gegeben wird.

Der erfindungsgemässe Beschleuniger oder das Zusatzmittel kann in flüssiger Form auch vor oder nach dem Mahlen des hydraulischen oder latent hydraulischen Bindemittels auf das Bindemittel, den Beton, Mörtel, sowie nicht hydraulische Zusatzstoffe aufgesprüht werden. Beispielsweise kann das hydraulische Bindemittel teilweise mit dem Beschleuniger oder dem Zusatzmittel enthaltend den Beschleuniger beschichtet werden. Dies ermöglicht die Herstellung eines hydraulischen Bindemittels, insbesondere Zement oder latent hydraulische Schlacke, welche bereits den Beschleuniger oder das Zusatzmittel enthaltend den Beschleuniger enthält und so als Fertigmischung, beispielsweise als sogenannten Schnellzement, gelagert und verkauft werden kann. Dieser Zement weist nach Zugabe des Anmachwassers die gewünschten Eigenschaften des schnellen Abbindens und der hohen Frühfestigkeit auf, ohne dass zusätzlich zum Anmachwasser auf der Baustelle ein weiteres Zusatzmittel zugefügt werden muss.

In einem weiteren Aspekt betrifft die vorliegende Erfindung ein Bindemittel enthaltendes Gemisch umfassend mindestens ein hydraulisch abbindendes Bindemittel und mindestens einen erfindungsgemässen Abbinde- und Erhärtungsbeschleuniger. Als Bindemittel kommen beispielsweise Zement, insbesondere Portlandzemente oder Tonerdeschmelzzemente und respektive deren Mischungen mit Flugaschen, Silica fume, Schlacke, Hüttensande, Gips und Kalksteinfiller oder gebrannter Kalk, ein latent hydraulisches Pulver oder inertes mikroskopisches Pulver in Frage. Als Bindemittel enthaltende Gemische kommen vorzugsweise Betonzusammensetzungen in Frage.

Weiterhin kann das Gemisch weitere Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Korrosionsinhibitoren, Verzögerer, Schwindreduzierer, Entschäumer oder Schaumbildner enthalten.

Vorzugsweise enthält das Bindemittel enthaltende Gemisch zusätzlich zum Beschleuniger mindestens einen Verflüssiger, vorzugsweise einen Verflüssiger auf Polycarboxylatether-Basis (PCE).

Der erfindungsgemässe Beschleuniger wird bevorzugt in einer Menge von 0.01 bis 30 Gew.-% bezogen auf das Gewicht des Bindemittels verwendet, um die gewünschte Wirkung zu erzielen. Es können auch mehrere Beschleuniger gemischt verwendet werden, um die gewünschte Wirkung zu erzielen.

In einem weiteren Aspekt betrifft die vorliegende Erfindung ein Verfahren zur Herstellung eines Bindemittels enthaltenden Gemisches wobei der mindestens eine erfindungsgemässe Beschleuniger getrennt oder als Zusatzmittel vorgemischt in fester oder flüssiger Form dem Bindemittel zugegeben wird.

In einem weiteren Aspekt betrifft die vorliegende Erfindung ein Verfahren zur Beschleunigung des Abbindens und Erhärtens von hydraulischen Bindemitteln sowie daraus hergestelltem Mörtel oder Beton, wobei einem Gemisch, welches hydraulische Bindemittel enthält, ein erfindungsgemässer Abbinde- und Erhärtungsbeschleuniger in einer Menge von 0.01 bis 30 Gew.-%, vorzugsweise 0.2 bis 20 Gew.-%, bezogen auf das Gewicht des hydraulischen Bindemittels, zugegeben wird.

Mit der vorliegenden Erfindung wird ein Zusatzmittel für hydraulische Bindemittel sowie ein Verfahren zu dessen Herstellung bereitgestellt, welches den Abbinde- und Erhärtungsprozess der hydraulischen Bindemittel beschleunigt ohne sich negativ auf die Verarbeitungszeiten, die Festigkeitsentwicklung oder die Dauerhaftigkeit der damit hergestellten Mörtel- oder Betonzusammensetzungen auszuwirken. Das erfindungsgemässe Zusatzmittel und insbesondere der erfindungsgemässe Abbinde- und Erhärtungsbeschleuniger ist somit besonders geeignet, wenn die hydraulisch abbindende Zusammensetzung sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten. Dadurch können die Fertigteile bereits nach wenigen Stunden entschalt, transportiert, gestapelt oder vorgespannt werden oder die Fahrbahnen oder Pisten befahren werden.

### Ausführungsbeispiele

### 1. Herstellungsverfahren Phosphonsäurederivat (PD) PD1, respektive PD2

Zur Herstellung von ***PD1*** wurde 2-Phosphonobutan-1,2,4-tricarbonsäure (BAYHIBIT, LANXESS International SA, Schweiz) und Polyglycol-methylether (M 500, Clariant SE, Deutschland) in einem Molverhältnis von 1 : 2 bei 100°C und 85 mbar solange umgesetzt, bis ein Veresterungsgrad von 90% aller Säuregruppen erreicht wurde.

***PD2*** wurde wie ***PD1*** hergestellt, mit der Ausnahme, dass als Polyglycol-methylether M 1000 (Clariant SE, Deutschland) anstelle von M 500 verwendet wurde.

### 2. Eingesetzte Rohstoffe

**Tabelle 1. Charakterisierung der verwendeten Rohstoffe und deren Bezeichnung.**

| | | |
|---|---|---|
| ***CV*** | Ca(NO₃)₂ | Yara GmbH&Co, Deutschland |
| ***SV*** | Natriumsilicat Na₂SiO₃ | Van Baerle, Schweiz |
| ***PCE*** | Kammpolymer, Polymethacrylsäure mit Polyoxyalkylenseitenketten | |
| ***MFA*** | Melaminformaldehyd-kondensat | Sikament® -FF, Sika Österreich GmbH, Österreich |
| ***PA1*** | Polyacrylsäure | Sokalan® PA 70 PN, BASF SE, Deutschland |
| ***PA2*** | Polyacrylsäure | Sokalan® PA 110 S, BASF SE, Deutschland |
| ***LS*** | Magnesium-Ligninsulfonat. | COLLEX 55 S 5, CHEMISCHE WERKE ZELL-WILDSHAUSEN GmbH Deutschland |
| ***NS*** | Sulfoniertes Naphthalinformaldehydkondensat | FLUBE OS 39, GIOVANNI BOZZETTO S.P.A., Italien |
| ***GL*** | Glycerin | Impac AG, Schweiz |
| ***HGL*** | 2-Methylpentan-2,4-diol | Hexasol®, Arkema, Frankreich |

### 3. Herstellung der Zusatzmittel

Es wurden erfindungsgemässe Beschleuniger sowie Vergleichverbindungen nach den nachstehend beschrieben Verfahren **A - E** hergestellt, wobei die verwendeten Rohstoffe gemäss Tabelle1 gemäss den in den Tabellen 2 bis 5 beschriebenen Verhältnissen eingesetzt wurden. Bei dem Herstellungsverfahren **A** handelt es sich um ein Vergleichsverfahren, bei den Herstellungsverfahren **B - E** handelt es sich um erfindungsgemässe Verfahren.

### Herstellungsverfahren A

Eine 20-prozentige wässrige Lösung ***CV*** und eine 20-prozentige wässrige Lösung ***SV*** wurden mittels einer Zahnradpumpe (MCP-Z, Ismatec) mit 1 bis 5 ml/ sek getrennt voneinander in einem Rotor-Stator Mischer (Megatron MT3000 mit Rotor-Stator MTG 30/4, Kinematica AG) bei 15'000 rpm zusammengeführt.

### Herstellunasverfahren B

Von der in den Tabellen 2 - 5 angegebenen Menge ***PD1**,* respektive ***PD2*,** wurde 60 Gew.-%, bezogen auf das Gesamtgewicht des eingesetzten ***PD*,** einer 20-prozentigen wässrigen Lösung **CV** und 40 Gew.-%, bezogen auf das Gesamtgewicht des eingesetzten ***PD,*** einer 20-prozentigen wässrigen Lösung ***SV*** zugegeben und jeweils für 1 min gerührt. Danach wurde die **CV/PD**-Lösung sowie die ***SV*/*PD***-Lösung mittels einer Zahnradpumpe (MCP-Z, Ismatec) mit 1 bis 5 ml/ sek getrennt voneinander in einem Rotor-Stator Mischer (Megatron MT3000 mit Rotor-Stator MTG 30/4, Kinematica AG) bei 15'000 rpm zusammengeführt.

### Herstellungsverfahren C

Von der in den Tabellen 2 - 5 angegebenen Menge ***PD1,*** respektive ***PD2,*** wurde 60 Gew.-%, bezogen auf das Gesamtgewicht des eingesetzten ***PD,*** einer 20-prozentigen wässrigen Lösung ***CV*** und 40 Gew.-%, bezogen auf das Gesamtgewicht des eingesetzten ***PD,*** einer 20-prozentigen wässrigen Lösung ***SV*** zugegeben und jeweils für 1 min gerührt. Danach wurde die ***CV*/*PD***-Lösung sowie die ***SV*/*PD***-Lösung mittels einer Zahnradpumpe (MCP-Z, Ismatec) mit 1 bis 5 ml/ sek getrennt voneinander in einem Rotor-Stator Mischer (Megatron MT3000 mit Rotor-Stator MTG 30/4, Kinematica AG) bei 15'000 rpm zusammengeführt.

Danach wurde die Reaktionslösung unter Verwendung von einem Homogenisator (APV 1000, APV Manifacturing) bei 50 bis 950 bar homogenisiert, indem die gesamt Reaktionslösung einmal vollständig durch den Homogenisator geleitet wurde.

### Herstellungsverfahren D

Eine 20-prozentige wässrige Lösung ***CV*** und eine 20-prozentige wässrige Lösung ***SV***wurden mittels einer Zahnradpumpe (MCP-Z, Ismatec) mit 1 bis 5 ml/ sek getrennt voneinander in einem Rotor-Stator (Megatron MT3000 mit Rotor-Stator MTG 30/4, Kinematica AG) bei 15'000 rpm zusammengeführt.

Danach wurde der Reaktionslösung die in den Tabellen 2 - 5 angegebene Menge ***PD1,*** respektive ***PD2,*** zugegeben und mittels einem Flügelrührer (Eurostar P CV, Ika Labortechnik) mit einem Flügelrührerdurchmesser von 10 cm mit 500 rpm während 1 min in einem 500 ml Becherglas gemischt.

Danach wurde die Reaktionslösung unter Verwendung eines Homogenisators (APV 1000, APV Manifacturing) homogenisiert, indem die gesamt Reaktionslösung einmal vollständig durch den Homogenisator geleitet wurde.

### Herstellungsverfahren E

Von der in den Tabellen 2 - 5 angegebenen Menge ***PD1,*** respektive ***PD2,*** wurde 60 Gew.-%, bezogen auf das Gesamtgewicht des eingesetzten ***PD,*** einer 20-prozentigen wässrigen Lösung ***CV*** und 40 Gew.-%, bezogen auf das Gesamtgewicht des eingesetzten ***PD*,** einer 20-prozentigen wässrigen Lösung ***SV*** zugegeben und jeweils für 1 min gerührt. Danach wurde die ***CV*/*PD***-Lösung mittels einer Schlauch-Quetschpumpe (ISM831C, Ismatec) während 20 min in ein 21 Becher, welcher unter einer Stickstoffschutzatmosphäre stand, geführt, in dem 500 ml Wasser vorgelegt waren. Der Inhalt des 2 Liter Bechers wurde unter Verwendung von einem Flügelrührer (RW 20.n, Ika Labortechnik) mit Flügelrührerdurchmesser 5 cm, mit 500 bis 2000 rpm gerührt. Die ***SV*/*PD***-Lösung wurde mittels einer Schlauch-Quetschpumpe (ISM831C, Ismatec) gleichzeitig während 20 min in einen Rotor-stator-Mischer (PT2100, Polytron) geführt, welcher ebenfalls in dem 2I Becher angeordnet war.

**Tabelle 2, * = Gew.-%, bezogen auf das Gesamtgewicht des Beschleunigers B.**

| Beschleuniger (B) | ***TrG**** | ***CV**** | ***SV**** | ***PD2**** | Ca:Si | Si:Na | HV | Viskosität |
|---|---|---|---|---|---|---|---|---|
| ***B1*** | 5.25 | 3.51 | 1.49 | 0.25 | 1.5 | 1.4 | E | n.a. |
| ***B2*** | 5.25 | 3.36 | 1.64 | 0.25 | 1.3 | 1.4 | E | n.a. |
| ***B3*** | 5.25 | 3.17 | 1.83 | 0.25 | 1.1 | 1.4 | E | n.a. |
| ***B4*** | 5.25 | 2.93 | 2.07 | 0.25 | 0.9 | 1.4 | E | n.a. |
| ***B5*** | 5.25 | 2.61 | 2.39 | 0.25 | 0.7 | 1.4 | E | n.a. |
| ***B6*** | 5.25 | 2.87 | 2.13 | 0.25 | 1.0 | 1.0 | E | n.a. |
| ***B7*** | 5.25 | 2.97 | 2.03 | 0.25 | 1.0 | 1.2 | E | n.a. |
| ***B8*** | 5.25 | 3.06 | 1.94 | 0.25 | 1.0 | 1.4 | E | n.a. |
| ***B9*** | 5.25 | 3.11 | 1.89 | 0.25 | 1.0 | 1.55 | E | n.a. |
| ***B10*** | 5.25 | 3.15 | 1.85 | 0.25 | 1.0 | 1.7 | E | n.a. |

**Tabelle 3, * = Gew.-%, bezogen auf das Gesamtgewicht des Beschleunigers B.**

| Beschleuniger (B) | ***TrG**** | ***CV**** | ***SV**** | ***PD1**** | Ca:Si | Si:Na | HV | Viskosität |
|---|---|---|---|---|---|---|---|---|
| ***B11*** | 20 | 14.05 | 5.95 | 0 | 1.5 | 1.4 | A | - |
| ***B12*** | 20.5 | 14.05 | 5.95 | 0.5 | 1.5 | 1.4 | B | ++ |
| ***B13*** | 20.75 | 14.05 | 5.95 | 0.75 | 1.5 | 1.4 | B | +++ |
| ***B14*** | 21 | 14.05 | 5.95 | 1 | 1.5 | 1.4 | B | +++ |
| ***B15*** | 22 | 14.05 | 5.95 | 2 | 1.5 | 1.4 | B | +++ |
| ***B16*** | 20 | 14.05 | 5.95 | 0 | 1.5 | 1.4 | A | - |
| ***B17*** | 21 | 14.05 | 5.95 | 1 | 1.5 | 1.4 | D | +++ |
| ***B18*** | 21 | 14.05 | 5.95 | 1 | 1.5 | 1.4 | B | +++ |
| ***B19*** | 21 | 14.05 | 5.95 | 1 | 1.5 | 1.4 | C | + |

**Tabelle 4, * = Gew.-%, bezogen auf das Gesamtgewicht des Beschleunigers B.**

| | Beschleuniger (B) | | | |
|---|---|---|---|---|
| | ***B20*** | ***B21*** | ***B22*** | ***B23*** |
| ***CV**** | 14.05 | 14.05 | 14.05 | 14.05 |
| ***SV**** | 5.95 | 5.95 | 5.95 | 5.95 |
| ***PCE**** | 1.0 | | | |
| ***MFA**** | | 0.8 | | |
| ***PA1**** | | | 0.6 | |
| ***PA2**** | | | | 0.72 |
| Ca : Si | 1.5 | 1.5 | 1.5 | 1.5 |
| Si : Na | 1.4 | 1.4 | 1.4 | 1.4 |
| HV | D | D | D | D |
| Viskosität | (-)/(-) | (-)/(-) | (-)/(-) | (--)/(--) |

**Tabelle 5, * = Gew.-%, bezogen auf das Gesamtgewicht des Beschleunigers B.**

| | Beschleuniger (B) | | | |
|---|---|---|---|---|
| | ***B24*** | ***B25*** | ***B26*** | ***B27*** |
| ***CV**** | 14.05 | 14.05 | 14.05 | 14.05 |
| ***SV**** | 5.95 | 5.95 | 5.95 | 5.95 |
| ***LS**** | 1.1 | | | |
| ***NS**** | | 0.8 | | |
| ***GL**** | | | 0.86 | |
| ***HGL**** | | | | 1.0 |
| Ca : Si | 1.5 | 1.5 | 1.5 | 1.5 |
| Si : Na | 1.4 | 1.4 | 1.4 | 1.4 |
| HV | D | D | D | D |
| Viskosität | (-)/(-) | (-)/(-) | (-)/(-) | (-)/(-) |

Die in Tabellen 2 bis 5 angegebenen Gew.-% (*) beziehen sich auf das Trockengewicht von ***PD1, PD2, CV, SV, PCE, MFA, PA1, PA2, LS, NS, GL*** und ***HGL*** bezogen auf das Gesamtgewicht des Endproduktes (Beschleuniger ***B***). Ca : Si steht für das Molverhältnis von Calcium : Silicium, Si : Na steht für das Molverhältnis von SiO₂ : Na₂O des verwendeten Natrium-Wasserglas Na₂SiO₃. ***TrG*** steht für den Anteil der Trockenmasse des Beschleunigers, in Gew.-%, bezogen auf das Gesamtgewicht des Beschleunigers. HV gibt an, nach welchem Herstellungsverfahren der Beschleuniger hergestellt wurde.

Zur Bestimmung der Viskosität der Beschleuniger wurden 100 g des Beschleunigers (Herstellungsverfahren A und D; direkt nach Herstellung, Herstellungsverfahren B und C; 24 h nach Herstellung) in ein 200 ml Becherglas (Füllhöhe 3 bis 5 cm) gegeben, mit einem hölzernen Zungenspatel breitseitig den Beschleuniger bis zum Boden des Becherglases durchstossen und unter Beibehaltung des Kontakts mit dem Boden zügig einmal Quer durch den Beschleuniger gefahren. Die Viskosität wurde folgendermassen optisch bewertet:
(--) Fest, Viskosität so hoch, dass ein Durchziehen eines holzigen Zungenspatel breitseitig nicht/nur unter hohem Kraftaufwand möglich ist, Viskosität nicht gemessen. Unter dem Begriff "gemessene Viskosität" werden im Folgenden Viskositäten gemessen mit einem Rotations-Viskosimeter der Firma Brookfield, Modell RVT (Messung mit Spindel 2, 3, 4 oder 5 bei 100 rpm) verstanden.
(-) Stichfest, nach dem Durchziehen eines hölzernen Zungenspatels breitseitig bleibt der Boden des Becherglases für mindestens 20 sec sichtbar, Viskosität >3000 mPa·s.
(+) Breiig, nach dem Durchziehen eines hölzernen Zungenspatel breitseitig bleibt der Boden des Becherglases für 1-5 sec sichtbar, gemessene Viskosität 750 - 3000 mPa·s.
(++) Honigartig, nach dem Durchziehen eines hölzernen Zungenspatel breitseitig bleibt der Boden des Becherglases für weniger als 1 sec sichtbar, gemessene Viskosität 400 - 750 mPa·s.
(+++) Flüssig, nach dem Durchziehen eines hölzernen Zungenspatel breitseitig ist der Boden des Becherglases nicht sichtbar, gemessene Viskosität ≤ 400 mPa·s.

Bei den Beschleunigern ***B1 - B10, B12 - B15*** und ***B17 - B19*** handelt es sich um erfindungsgemässe Beschleuniger, bei den Beschleunigern ***B11* ,*B16*** und ***B20 - B27*** handelt es sich um Vergleichsbeispiele.

In Tabelle 3 zeigen die Ergebnisse von ***B11*- *B15*,** dass die Viskosität der hergestellten Beschleuniger sich im Falle der Zugabe von ***PD* (*B12*- *B15*)** im Vergleich zum Beschleuniger ohne ***PD*** (***B11***) stark verbessert. Besonders vorteilhafte Viskositäten werden mit einem Anteil an ***PD1*** von 0.75 - 2 Gew.-% erhalten.

Die Ergebnisse von ***B16*- *B19*** zeigen, dass die Viskosität der Beschleuniger hergestellt nach einem der erfindungsgemässen Verfahren B, C oder D im Vergleich zum Beschleuniger hergestellt nach dem Vergleichsverfahren A, welches keine Zugabe von ***PD*** vorsieht, stark verbessert. Besonders vorteilhafte Viskositäten werden mit den Verfahren D und B erhalten.

Die Tabelle 4 und 5 zeigen Vergleichsbeispiele von Beschleunigern, welche analog zu dem Beschleuniger ***B17*** hergestellt wurden, mit dem Unterschied, dass anstelle von ***PD1*** die in den Tabellen 4 und 5 ausgewiesenen Mengen eines gängigen in Beschleunigern verwendeten Dispergiermittels zugegeben wurde. Aus den Resultaten der Viskositäten ist ersichtlich, dass die erfindungsgemässe Zugabe eines Phosphonsäurederivates der Formel (I) die Viskosität des hergestellten Beschleunigers ***B17*** im Vergleich zu den gängigen in Beschleunigern verwendeten Dispergiermitteln stark verbessert.

### 4. Mörteltests

Die Wirksamkeit der erfindungsgemässen Beschleuniger ***B1* - *B10*, *B12* - *B15*** und ***B17* - *B19*** sowie der Vergleichsbeispiele ***B11*** und ***B16*** wurde im Mörtel getestet.

| Zusammensetzung der Mörtelmischung (**MM**): (Grösstkorn 8mm) | Menge in g |
|---|---|
| Portlandzement (SVW CEM I 42.5N) | 750 |
| Kalksteinfiller | 141 |
| Sand 0-1 mm | 738 |
| Sand 1-4 mm | 1107 |
| Sand 4-8 mm | 1154 |

Als Zement wurde SVW (schweizer Zementsorten Siggenthal, Vigier, Wildegg, 1:1:1 Gemisch) CEM I 42.5N verwendet, welcher eine Feinheit nach Blaine von ca. 3400 cm²/g hat.

Die Sande, der Filler und der Zement wurden 1 Minute in einem Hobart-Mischer trocken gemischt. Innerhalb von 30 Sekunden wurde das Anmachwasser, in dem der Beschleuniger gelöst oder dispergiert war, zugegeben und noch weitere 2.5 Minuten gemischt. Die Gesamt-Mischzeit nass war 3 Minuten. Der Wasser/Zement-Wert (w/z-Wert) betrug 0.4.

Allen Mörteln wurde zusätzlich noch 1 Gew.-% eines Verflüssigers (Sika ViscoCrete 3081 S, erhältlich bei Sika Schweiz AG, Schweiz) zugegeben, um die Verarbeitbarkeit der Mörtelmischungen zu verbessern.

Zur Bestimmung der Wirksamkeit des erfindungsgemässen Beschleunigers wurden die Mörtelmischungen ***MM*** mit den verschiedenen Beschleunigern der Tabellen 2 und 3 versetzt (siehe Tabelle 6). Die Mörtelzusammensetzungen (***MZ***) ***MZ2 - MZ6, MZ8 - MZ12, MZ15 - MZ18*** und ***MZ21*- *MZ23*** stellen erfindungsgemässe Beispiele dar, während die Mörtelzusammensetzungen ***MZ1, MZ7, MZ13, MZ14, MZ19*** und ***MZ20*** Vergleichsbeispiele darstellen.

Zur Bestimmung der Wirksamkeit des erfindungsgemässen Beschleunigers beziehungsweise des Zusatzmittels wurde das Ausbreitmass (ABM) sowie die Druckfestigkeit in Tabelle 6 bestimmt.

**Tabelle 6: * = Gew.-%, bezogen auf das Gesamtgewicht des Mörtelzusammensetzung MZ (inklusive Anmachwasser), Ausbreitmass (ABM) in mm nach 1 Minuten (min).**

| | Beschleuni ger/Gew.-%* | ABM nach 1 min | Druckfestig keit (MPa) 8 h | Vergleich zu ***MZ1*** (%) 8 h | Druckfestig keit (MPa) 24 h | Vergleich zu ***MZ1*** (%) 24 h |
|---|---|---|---|---|---|---|
| ***MZ1*** | - | 191 | 1.4 | - | 30.6 | - |
| ***MZ2*** | ***B1***/16 | 172 | 2.4 | 71 | 35.5 | 16 |
| ***MZ3*** | ***B2***/16 | 160 | 2.6 | 86 | 36.0 | 18 |
| ***MZ4*** | ***B3***/16 | 153 | 2.5 | 79 | 36.1 | 18 |
| ***MZ5*** | ***B4***/16 | 152 | 3.1 | 121 | 36.3 | 19 |
| ***MZ6*** | ***B5***/16 | 143 | 3.0 | 114 | 34.8 | 14 |

| | Beschleuni ger/Gew.-%* | ABM nach 1 min | Druckfestig keit (MPa) 8 h | Vergleich zu ***MZ7*** (%) 8h | Druckfestig keit (MPa) 24 h | Vergleich zu ***MZ7*** (%) 24 h |
|---|---|---|---|---|---|---|
| ***MZ7*** | - | 193 | 1.3 | - | 31.9 | - |
| ***MZ8*** | ***B6***/16 | 131 | 5.9 | 354 | 38.2 | 20 |
| ***MZ9*** | ***B7***/16 | 156 | 3.3 | 154 | 36.3 | 14 |
| ***MZ10*** | ***B8***/16 | 157 | 2.5 | 92 | 37.7 | 18 |
| ***MZ11*** | ***B9***/16 | 155 | 2.3 | 77 | 38.1 | 19 |
| ***MZ12*** | ***B10***/16 | 158 | 2.3 | 77 | 36.2 | 14 |

| | Beschleuni ger/Gew.-%* | ABM nach 1 min | Druckfestig keit (MPa) 8 h | Vergleich zu ***MZ13*** (%) 8h h | Druckfestig keit (MPa) 24 h | Vergleich zu ***MZ13*** (%) 24 h |
|---|---|---|---|---|---|---|
| ***MZ13*** | - | 195 | 1.0 | - | 33 | - |
| ***MZ14*** | ***B11***/4 | 150 | 4.0 | 300 | 38 | 15 |
| ***MZ15*** | ***B12***/4 | 178 | 2.0 | 100 | 36 | 9 |
| ***MZ16*** | ***B13***/4 | 193 | 1.9 | 90 | 34 | 3 |
| ***MZ17*** | ***B14***/4 | 184 | 1.8 | 80 | 30 | -9 |
| ***MZ18*** | ***B15***/4 | 182 | 1.3 | 30 | 33 | 0 |

| | Beschleuni ger/Gew.-%* | ABM nach 1 min | Druckfestig keit (MPa) 8 h | Vergleich zu ***MZ19*** (%) 8h | Druckfestig keit (MPa) 24 h | Vergleich zu ***MZ19*** (%) 24 h |
|---|---|---|---|---|---|---|
| ***MZ19*** | *-* | 195 | 1.0 | - | 33 | - |
| ***MZ20*** | **B16**/4 | 150 | 4.0 | 300 | 38 | 14 |
| ***MZ21*** | ***B17***/4 | 148 | 3.6 | 260 | 37 | 13 |
| ***MZ22*** | ***B18***/4 | 184 | 1.8 | 80 | 30 | -8 |
| ***MZ23*** | ***B19***/4 | 170 | 2.3 | 130 | 38 | 16 |

Das Ausbreitmass (ABM) des Mörtels wurde gemäss EN 1015-3 bestimmt. Die Bestimmung erfolgte nach 1 min. Die Prüfung zur Bestimmung der Druckfestigkeit (in N/mm²) erfolgte mittels Prismen (40 x 40 x 160mm) nach 8 Stunden und 24 Stunden gemäss EN 196.1 und EN 12190.

Für die Anwendung im Strassen- oder Brückenbau, bei der Vorfabrikation von Betonelementen bei Beton- und Stahlbetonfertigteilen oder bei Pistensanierungen, wo die Fertigteile bereits nach wenigen Stunden entschalt, transportiert, gestapelt oder vorgespannt werden müssen oder die Fahrbahnen oder Pisten befahren werden müssen, sind hohe Festigkeitswerte nach 8 beziehungsweise 24 Stunden von grösster Bedeutung.

Die Ergebnisse von ***MZ1 - MZ6*** zeigen, dass sich die Mörtelzusammensetzungen ***MZ3*** und ***MZ4***, welche aufgrund der Beschleuniger ***B3***, respektive ***B4***, ein Molverhältnis von Calcium : Silicium von 0.9 - 1.2 aufweisen, durch ein gutes Ausbreitmass bei gleichzeitig hoher Druckfestigkeit nach 8 h auszeichnen.

Weiter zeigen die Ergebnisse von ***MZ7** - **MZ12**,* dass sich die *Mörtelzusammensetzungen **MZ8, MZ9*** und ***MZ10,*** welche aufgrund der Beschleuniger ***B*6,** ***B7**,* respektive ***B8***, ein Natriumsilicat mit einem Molverhältnis von SiO₂ : Na₂O= 1.0- 1.5 aufweisen, durch ein gutes Ausbreitmass bei gleichzeitig hoher Druckfestigkeit nach 8 h auszeichnen.

## Patentansprüche

1. Verfahren zur Herstellung eines Abbinde- und Erhärtungsbeschleunigers für hydraulische Bindemittel aufweisend einen Schritt:
(i) zur Umsetzung einer Calciumverbindung **CV** mit einer Siliciumverbindung **SV**; sowie einen Schritt
(ii) zur Zugabe eines Phosphonsäurederivates der Formel (I) 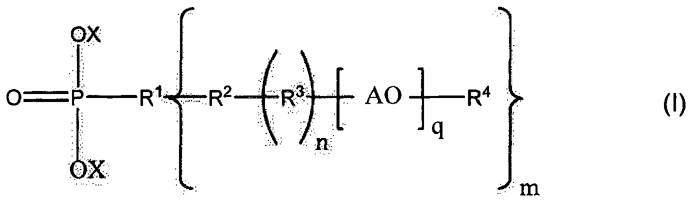 wobei X für H⁺, Alkalimetallion, Erdalkalimetallion, zwei- oder dreiwertiges Metallion, Ammoniumion, organische Ammoniumgruppe oder einen Rest der Formel (II) steht 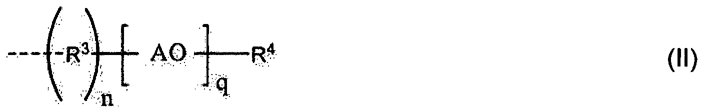 wobei R¹ für einen organischen Rest mit 1 bis 10 C-Atomen,
R² unabhängig voneinander für 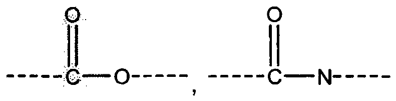 oder 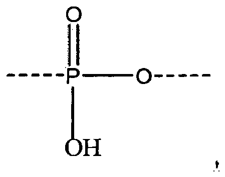 R³ für eine Alkylgruppe mit 1 bis 6 C-Atomen,
R⁴ für H, eine Alkylgruppe, vorzugsweise mit 1 bis 20 C-Atomen, eine Alkylarylgruppe, vorzugsweise mit 7 bis 20 C-Atomen steht,
wobei der Substituent A unabhängig voneinander für eine C2- bis C4-Alkylengruppe steht, der Index q einen Wert von 2 bis 300, insbesondere von 2 bis 50, besonders bevorzugt von 3 bis 10, darstellt, der Index m einen Wert von 1 bis 4, vorzugsweise einen Wert von 3, darstellt, der Index n einen Wert von 0 bis 1 darstellt
und wobei die Calciumverbindung **CV** ausgewählt ist aus der Gruppe bestehend aus Calciumchlorid, Calciumnitrat, Calciumnitrit, Calciumformiat, Calciumacetat, Calciumlactat und Calciumsulfamat
und die Siliciumverbindung **SV** ausgewählt ist aus der Gruppe bestehend aus Natriumsilicat, Kaliumsilicat, Lithiumsilicat, Wasserglas, Kieselsäure, Natriummetasilicat, Kaliummetasilicat, Di-Natriummetasilicat, Di-Kaliummetasilicate, Siliciumdioxid, Di-Natriumdisilicat und Di-Natriumtrisilicat.

2. Verfahren gemäss Anspruch 1, **dadurch gekennzeichnet, dass** in Schritt (i) die Umsetzung der Calciumverbindung **CV** mit der Siliciumverbindung **SV** in Gegenwart von Wasser, insbesondere in Wasser, stattfindet.

3. Verfahren gemäss Anspruch 2, **dadurch gekennzeichnet, dass** die Calciumverbindung **CV** und die Siliciumverbindung **SV** getrennt voneinander dem Wasser zugegeben werden.

4. Verfahren gemäss einem der vorhergehenden Ansprüche, **dadurch gekennzeichnet, dass** der Anteil des Phosphonsäurederivats der Formel (I) 0.01- 10 Gew.-%, bevorzugt 0.1 bis 2 Gew.-%, bezogen auf das Gesamtgewicht des Abbinde- und Erhärtungsbeschleunigers, beträgt.

5. Verfahren gemäss einem der vorhergehenden Ansprüche, **dadurch gekennzeichnet, dass** im Verlauf der Umsetzung von Schritt (i) folgende Molverhältnisse vorliegen:
Calcium : Silicium = 0.5 - 2.0, vorzugsweise 0.8 - 1.5, insbesondere bevorzugt 0.9 - 1.2.

6. Verfahren gemäss einem der vorhergehenden Ansprüche, **dadurch gekennzeichnet, dass** es sich bei der Siliciumverbindung **SV** um Natriumsilicat handelt mit einem Molverhältnis von SiO₂ : Na₂O= 0.5 - 4.0, vorzugsweise 0.8 - 2, insbesondere bevorzugt 1.0- 1.5.

7. Verfahren gemäss einem der vorhergehenden Ansprüche, **dadurch gekennzeichnet, dass** es sich bei der Calciumverbindung **CV** um Calciumnitrat und mit einer Siliciumverbindung **SV** um Natriumsilicat handelt, wobei das Molverhältnis während der Umsetzung in Schritt (i) von Calciumnitrat: Natriumsilicat = 0.25 - 8.0, vorzugsweise 0.65 - 3 beträgt, vorzugsweise weist das Natriumsilicat ein Molverhältnis SiO₂ : Na₂O von 1.0- 1.5 auf.

8. Verfahren gemäss einem der vorhergehenden Ansprüche, **dadurch gekennzeichnet**, das Verfahren weiter einen Schritt
(v) des Zerkleinerns des Umsetzungsproduktes aus Schritt (i) aufweist, insbesondere Zerkleinern durch Rührwerksmühlen, Walzenstühlen, Kolloidmühlen und/oder Homogenisatoren, vorzugsweise durch Homogenisatoren.

9. Verfahren gemäss Anspruch 8, **dadurch gekennzeichnet**, das der Schritt (v) zu einer durchschnittlichen Partikelgrösse des Reaktionsprodukts von 1000 - 10, vorzugsweise 100 - 10 nm führt.

10. Abbinde- und Erhärtungsbeschleuniger hergestellt nach einem Verfahren gemäss einem der Ansprüche 1 - 9.

11. Bindemittel enthaltendes Gemisch umfassend mindestens ein hydraulisch abbindendes Bindemittel und mindestens einen Abbinde- und Erhärtungsbeschleuniger gemäss Anspruch 10.

12. Verfahren zur Beschleunigung des Abbindens und Erhärtens eines hydraulischen Bindemittels durch Zugabe eines Abbinde- und Erhärtungsbeschleunigers, wie er erhältlich ist aus einem Verfahren gemäss einem der Ansprüche 1 - 9, **dadurch gekennzeichnet, dass** man einem Gemisch, welches das genannte hydraulische Bindemittel enthält, 0.01 bis 30 Gew.-% des Abbinde- und Erhärtungsbeschleunigers, bezogen auf das Gewicht dieses Bindemittels, zugibt.

## Claims

1. Method for producing a setting and curing accelerator for hydraulic binders, having a step:
(i) for reacting a calcium compound **CV** with a silicon compound **SV**; as well as a step
(ii) for adding a phosphonic acid derivative having the formula (I) 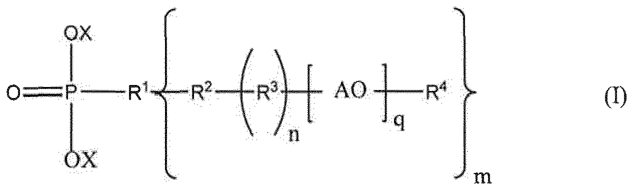 where X stands for H⁺, alkaline metal ion, alkaline earth metal ion, bivalent or trivalent metal ion, ammonium ion, organic ammonium group or a radical having the formula (II) 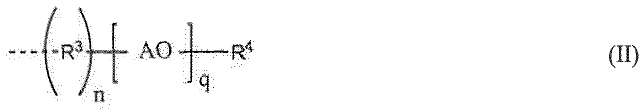 where R¹ stands for an organic radical with 1 to 10 C atoms,
R² independently of one another stands for 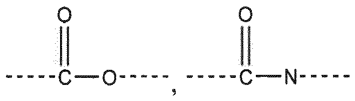 or 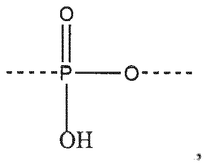 R³ stands for an alkyl group with 1 to 6 C atoms,
R⁴ stands for H, an alkyl group, preferably with 1 to 20 C atoms, an alkyl aryl group, preferably with 7 to 20 C atoms,
where the substituent A independently of one another stands for a C2 to C4 alkylene group, the subscript q stands for a value from 2 to 300, particularly from 2 to 50, particularly preferably from 3 to 10, the subscript m stands for a value from 1 to 4, preferably for a value of 3, and the subscript n stands for a value from 0 to 1,
and where the calcium compound CV is selected from the group consisting of calcium chloride, calcium nitrate, calcium nitrite, calcium formate, calcium acetate, calcium lactate and calcium sulfamate
and the silicon compound SV is selected from the group consisting of sodium silicate, potassium silicate, lithium silicate, water glass, silica, sodium metasilicate, potassium metasilicate, disodium metasilicate, dipotassium metasilicate, silicon dioxide, disodium disilicate and disodium trisilicate.

2. Method according to claim 1, **characterized in that** in step (i), the reaction of the calcium compound **CV** with the silicon compound **SV** takes place in the presence of water, particularly in water.

3. Method according to claim 2, **characterized in that** the calcium compound **CV** and the silicon compound **SV** are added to the water separately from one another.

4. Method according to any one of the preceding claims, **characterized in that** the proportion of the phosphonic acid derivative having the formula (I) amounts to 0.01 - 10 wt-%, preferably 0.1 to 2 wt-%, in relation to the total weight of the setting and curing accelerator.

5. Method according to any one of the preceding claims, **characterized in that** during the reaction in step (i), the following molar ratios are present:
calcium : silicon = 0.5 - 2.0, preferably 0.8 - 1.5, particularly preferably 0.9 - 1.2.

6. Method according to any one of the preceding claims, **characterized in that** the silicon compound SV is sodium silicate with a molar ratio of SiO₂ : Na₂O = 0.5 - 4.0, preferably 0.8 - 2, particularly preferably 1.0 - 1.5.

7. Method according to any one of the preceding claims, **characterized in that** the calcium compound **CV** is calcium nitrate and a silicon compound **SV** is sodium silicate, where the molar ratio during the reaction in step (i) of calcium nitrate: sodium silicate = 0.25 - 8.0, preferably 0.65 - 3; and preferably, the sodium silicate has a molar ratio SiO₂ : Na₂O of 1.0 - 1.5.

8. Method according to any one of the preceding claims, **characterized in that** the method furthermore has the step of
(v) comminuting the reaction product from step (i), particularly comminution by means of stirrer mills, roller stands, colloid mills and/or homogenizers, preferably by homogenizers.

9. Method according to claim 8, **characterized in that** step (v) leads to an average particle size of the reaction product of 1000 - 10, preferably 100 - 10 nm.

10. Setting and curing accelerator produced according to a method according to any one of claims 1 - 9.

11. Mixture containing binders, comprising at least one hydraulically setting binder and at least one setting and curing accelerator according to claim 10.

12. Method for accelerating the setting and curing of a hydraulic binder by adding a setting and curing accelerator, as can be obtained from a method according to any one of claims 1 - 9, **characterized in that** 0.01 to 30 wt-% of the setting and curing accelerator, in relation to the weight of the stated hydraulic binder, is added to a mixture that contains said binder.

## Revendications

1. Procédé de production d'un accélérateur de cuisson et de durcissement destiné à des liants hydrauliques, comportant l'étape suivante :
(i) faire réagir un composé de calcium **CV** avec un composé de silicium **SV ;** ainsi qu'une étape
(ii) consistant à ajouter un dérivé d'acide phosphonique répondant à la formule (I) 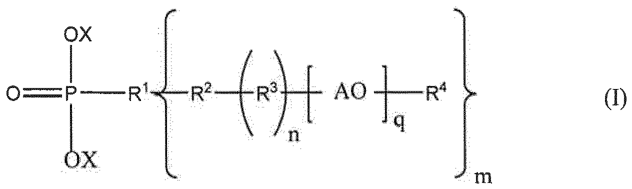 où X représente H⁺, un ion métallique alcalin, un ion métallique alcalino-terreux ou un ion métallique trivalent, un ion ammonium, un groupe ammonium organique ou un radical répondant à la formule (II) 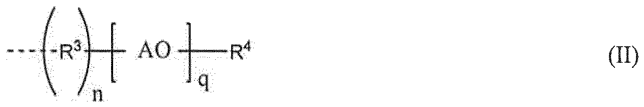 où R¹ représente un radical organique comportant 1 à 10 atomes de carbone,
R² indépendamment d'un autre représente 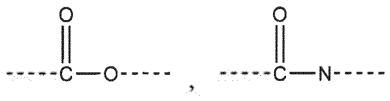 ou 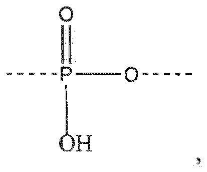 R³ représente un groupe alkyle comportant 1 à 6 atomes de carbone,
R⁴ représente H, un groupe alkyle, de préférence avec 1 à 20 atomes de carbone, un groupe alkyle aryle, de préférence avec 7 à 20 atomes de carbone,
où le substituant A représente, indépendamment d'un autre, un groupe alkylène en C2 à C4, l'indice q représente une valeur comprise entre 2 et 300, en particulier entre 2 et 50, ou plus particulièrement entre 3 et 10, l'indice m représente une valeur comprise entre 1 et 4, de préférence une valeur égale à 3, et l'indice n représente une valeur égale à 0 ou à 1,
et où le composé de calcium **CV** est choisi dans l'ensemble constitué du chlorure de calcium, du nitrate de calcium, du nitrite de calcium, du formate de calcium, de l'acétate de calcium, du lactate de calcium et du sulfamate de calcium.
et où le composé de silicium **SV** est choisi dans l'ensemble constitué du silicate de sodium, du silicate de potassium, du silicate de lithium, de silicate de sodium, de silice, de métasilicate de sodium, de métasilicate de potassium, de métasilicate de disodium, de métasilicate de dipotassium, de dioxyde de silicicum, de disilicate de disodium et de trisilicate de disodium.

2. Procédé selon la revendication 1, **caractérisé en ce qu'**à l'étape (i), la réaction du composé de calcium **CV** avec le composé de silicium **SV** a lieu en présence d'eau, en particulier dans l'eau.

3. Procédé selon la revendication 2, **caractérisé en ce que** le composé de calcium **CV** et le composé de silicium **SV** sont ajoutés dans l'eau séparément l'un de l'autre.

4. Procédé selon l'une quelconque des revendications précédentes, **caractérisé en ce que** la proportion du dérivé d'acide phosphonique répondant à la formule (I) s'élève à 0,01 à 10 % en poids, de préférence à 0,1 à 2 % en poids, en lien au poids total de l'accélérateur de durcissement et de cuisson.

5. Procédé selon l'une quelconque des revendications précédentes, **caractérisé en ce qu'**au cours de la réaction à l'étape (i), les rapports molaires suivants sont présents :
calcium/silicium = 0,5 à 2,0, de préférence de 0,8 à 1,5, mieux encore de 0,9 à 1,2.

6. Procédé selon l'une quelconque des revendications précédentes, **caractérisé en ce que** le composé de silicium **SV** est le silicate de sodium avec un rapport molaire de SiO₂ : Na₂O = 0,5 à 4,0, de préférence 0,8 à 2, ou mieux encore de 1,0 à 1,5.

7. Procédé selon l'une quelconque des revendications précédentes, **caractérisé en ce que** le composé de calcium **CV** est le nitrate de calcium et un composé de silicium **SV** est le silicate de sodium, le rapport molaire pendant la réaction à l'étape (i) de nitrate de calcium : silicate de sodium = 0,25 à 8,0, de préférence 0,65 à 3 ; et de préférence, le silicate de sodium a un rapport molaire de SiO₂ au Na₂O compris entre 1,0 et 1,5.

8. Procédé selon l'une quelconque des revendications précédentes, **caractérisé en ce que** le procédé comporte en outre l'étape suivante
(v) fragmenter le produit de réaction de l'étape (i), en particulier par fragmentation au moyen de moulins agitateurs, de supports à rouleaux, de moulins à colloïdes et/ou d'homogénéisateurs, de préférence d'homogénéisateurs.

9. Procédé selon la revendication 8, **caractérisé en ce que** l'étape (v) conduit à une taille moyenne de particule du produit de réaction comprise entre 1 000 et 10, de préférence entre 100 et 10 nm.

10. Accélérateur de durcissement et de cuisson produit selon un procédé conforme à l'une quelconque des revendications 1 à 9.

11. Mélange contenant des liants, comprenant au moins un liant durcissant par voie hydraulique et au moins un accélérateur de durcissement et de cuisson selon la revendication 10.

12. Procédé d'accélération du durcissement et de la cuisson d'un liant hydraulique par ajout d'un accélérateur de cuisson et de durcissement, comme on peut en obtenir selon un procédé conforme à l'une quelconque des revendications 1 à 9, **caractérisé en ce que** 0,01 à 30 % en poids de l'accélérateur de cuisson et de durcissement, en lien avec le poids du liant hydraulique indiqué, est ajouté à un mélange qui contient ledit liant.
